Europäisches Patentamt

(19) European Patent Office

Office européen des brevets

(11) Veröffentlichungsnummer: **0 007 545**

**A1**

(12) # EUROPÄISCHE PATENTANMELDUNG

(21) Anmeldenummer: **79102462.3**

(22) Anmeldetag: **16.07.79**

(51) Int. Cl.³: **C 08 F 10/00**
**C 08 F 4/64**

(30) Priorität: **20.07.78 DE 2831829**

(43) Veröffentlichungstag der Anmeldung:
**06.02.80 Patentblatt 80/3**

(84) Benannte Vertragsstaaten:
**AT BE DE FR GB IT**

(71) Anmelder: **BASF Aktiengesellschaft**
**Carl-Bosch-Strasse 38**
**D-6700 Ludwigshafen(DE)**

(72) Erfinder: **Staiger, Gerhard, Dr. Chem.**
**Virchowstrasse 26**
**D-6712 Bobenheim-Roxheim(DE)**

(54) Verfahren zum Herstellen einer Komponente für Polymerisationskatalysatoren.

(57) Die vorliegende Erfindung betrifft ein spezielles Verfahren zum Herstellen einer Titan-Komponente für Polymerisationskatalysatoren des Ziegler-Natta-Typs.

Charakteristisch für das erfindungsgemäße Verfahren ist, daß man zunächst (1) in einer ersten Stufe (1.1) einen kleinteiligen Stoff der allgemeinen Formel $Mg_6Cl_{12} \cdot x\ AlCl_3$, worin x steht für eine Zahl im Bereich von 0,5 bis 3, und (1.2) einen Benzoesäurealkylester, dessen Alkylgruppen 1 bis 8 Kohlenstoffatome aufweisen, in einem bestimmten Mengenverhältnis in einer Kugelmühle unter bestimmten Mahlbedingungen in Abwesenheit von Verdünnungsmitteln miteinander vermahlt; dann (2) in einer zweiten Stufe (2.1) den aus Stufe (1) resultierenden Stoff mit (2.2) Titantetrachlorid in einem bestimmten Mengenverhältnis zusammenbringt, das Ganze unter ständiger Durchmischung einige Zeit auf erhöhter Temperatur hält und den dabei resultierenden Feststoff unter Abtrennung überschüssigen Titantetrachlorids isoliert; und schließlich (3) - gegebenenfalls - in einer dritten Stufe (3.1) den aus Stufe (2) resultierenden Feststoff erneut mit (3.2) Titantetrachlorid in einem bestimmten Mengenverhältnis zusammenbringt, das Ganze unter ständiger Durchmischung abermals einige Zeit auf erhöhter Temperatur hält und den dabei resultierenden Feststoff - als die neue Titan-Komponente - unter Abtrennung überschüssigen Titantetrachlorids isoliert. Die neue titan-Komponente erlaubt es, Polymerisate von $\alpha$-Monoolefinen nicht nur in hoher Ausbeute, sondern auch mit hoher Isotaktizität herzustellen.

EP 0 007 545 A1

Croydon Printing Company Ltd.

BASF Aktiengesellschaft                    O.Z. 0050/033307

Verfahren zum Herstellen einer Komponente für Polymerisationskatalysatoren

Die vorliegende Erfindung betrifft ein Verfahren zum Herstellen einer Titan-Komponente für Polymerisationskatalysatoren des Ziegler-Natta-Typs, insbesondere zur Homo- und Copolymerisation von $C_2$- bis $C_6$-$\alpha$-Monoolefinen.

Verfahren der genannten Art sind in einer Reihe von Varianten bekannt; sie sind vornehmlich auf das Ziel gerichtet, solche Titan-Komponenten zu gewinnen, die - nach dem Aktivieren mit aluminiumorganischen Verbindungen oder dergleichen - Katalysatoren ergeben, die bei der Polymerisation der Olefine zu hohen spezifischen Ausbeuten an Polyolefinen und/oder zu Polyolefinen mit einem relativ hohen Anteil an stereoregulärem Polymerisat führen. Weitere Ziele sind, die Polyolefine in gut handhabbarer Form, in leicht weiterzuverarbeitender Form und mit den erwünschten anwendungstechnischen Eigenschaften zu erhalten; - wobei letztere je nach dem vorgesehenen Verwendungszweck in unterschiedliche Richtungen gehen können.

Die bekannten Verfahren haben zu beachtlichen Erfolgen geführt; jedoch ist meist noch zu bemängeln, daß die entsprechenden Titan-Komponenten beim Einsatz im Rahmen

HWz/Kl

von Katalysatoren des Ziegler-Natta-Typs bei der Polymerisation von $\alpha$-Olefinen einerseits zwar zu Polymerisaten führen, die eine relativ hohe Stereoregularität (Isotaktizität) haben, andererseits aber die Polymerisate nur in relativ geringen spezifischen Ausbeuten liefern; - oder vice versa. Es kommt hinzu, daß im allgemeinen auch anderweitige Wünsche noch offen bleiben, z.B. hinsichtlich der erwähnten anwendungstechnischen Eigenschaften.

Der vorliegenden Erfindung lag die Aufgabe zugrunde, ein Verfahren der eingangs definierten Art aufzuzeigen, mit dem es möglich ist, solche Titan-Komponenten zu erhalten, die technisch fortschrittliche Eigenschaften mit sich bringen und es insbesondere z.B. ermöglichen, Polymerisate zu gewinnen - vor allem solche, die durch Suspensionspolymerisation in flüssigem Monomeren hergestellt werden - die besonders gute morphologische Eigenschaften besitzen, d.h. gut zu handhaben und zu verarbeiten sind.

Es wurde gefunden, daß die gestellte Aufgabe gelöst werden kann, wenn man zunächst in einer ersten Stufe eine bestimmte kleinteilige Magnesiumchlorid-Aluminiumchlorid-Komplexverbindung mit einem bestimmten Benzoesäurealkylester unter bestimmten Bedingungen miteinander vermahlt, und dann den aus der ersten Stufe resultierenden Stoff unter bestimmten Bedingungen, insbesondere auch bestimmten Temperaturbedingungen, in einer zweiten Stufe oder - vorzugsweise - in einer zweiten sowie einer davon getrennten anschließenden dritten Stufe, mit Titantetrachlorid umsetzt.

Dementsprechend ist der Gegenstand der vorliegenden Erfindung ein Verfahren zum Herstellen einer Titan-Komponente für Polymerisationskatalysatoren des Ziegler-Natta-Typs, mit dem kennzeichnenden Merkmal, daß man zunächst

(1) in einer ersten Stufe

(1.1) 100 Gewichtsteile eines kleinteiligen, einen Teilchendurchmesser im Bereich von 20 bis 1000, vorzugsweise 50 bis 500 , um aufweisenden Stoffes der allgemeinen Formel $Mg_6Cl_{12} \cdot x\ AlCl_3$, worin x steht für eine Zahl im Bereich von 0,5 bis 3, vorzugsweise 1,5 bis 2,5 und insbesondere 1,8 bis 2,1; mit

(1.2) 5 bis 100, vorzugsweise 30 bis 50 Gewichtsteilen eines Benzoesäurealkylesters, dessen Alkylgruppen 1 bis 8, vorzugsweise 2 bis 5 Kohlenstoffatome aufweisen;

in einer Kugelschwingmühle unter einer Mahlbeschleunigung von 30 bis 80, vorzugsweise 45 bis 55 $m \cdot sec^{-2}$ über eine Zeitspanne von 10 bis 200, vorzugsweise 30 bis 90 Stunden in Abwesenheit von Verdünnungsmitteln miteinander vermahlt; dann

(2) in einer zweiten Stufe

(2.1) 100 Gewichtsteile des aus Stufe (1) resultierenden Stoffes mit

(2.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 70 bis 90°C hält und den dabei resultierenden Feststoff unter Abtrennung überschüssigen Titantetrachlorids isoliert; und schließlich

(3) - gegebenenfalls und vorzugsweise - in einer dritten Stufe

  (3.1) 100 Gewichtsteile des aus Stufe (2) resultierenden Feststoffes erneut mit

  (3.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 120 bis 140°C hält und den dabei resultierenden Feststoff unter Abtrennung überschüssigen Titantetrachlorids isoliert.

Zur stofflichen Seite des neuen Verfahrens ist das folgende zu sagen:

Magnesiumchlorid-Aluminiumchlorid-Komplexverbindungen (1.1) der im Rahmen der Erfindung in Betracht kommenden Art sind aus der anorganischen Chemie wohlbekannt, so daß auf sie nicht näher eingegangen zu werden braucht. Zu erwähnen ist jedoch, daß eine besonders gut geeignete Komplexverbindung die Formel $Mg_6Cl_{12} \cdot 2\ AlCl_3$ hat; diese Komplexverbindung kann z.B. erhalten werden durch erschöpfende Chlorierung des - natürlich entstandenen oder synthetisch hergestellten - Mineralstoffs Manasseit (Formel: $Mg_6 \cdot Al_2 \cdot OH_{16} \cdot CO_3 \cdot 4\ H_2O$).

Geeignete Benzoesäurealkylester (1.2) sind vor allem der Äthyl-, n-Propyl-, i-Propyl-, n-Butyl-, sec.-Butyl- und tert.-Butylester. Da Benzoesäurealkylester als solche zum wohlbekannten Stand der Technik gehören, braucht auch auf sie hier nicht näher eingegangen zu werden.

Das zu verwendende Titantetrachlorid (2.2) bzw. (3.2) sollte zweckmäßigerweise von der Art sein, die üblicherweise für Polymerisationskatalysatoren eingesetzt wird.

Die Durchführung des erfindungsgemäßen Verfahrens ist einfach und für den Fachmann ohne Erläuterungen möglich. Lediglich zu den Stufen (2) und (3) ist zu erwähnen, daß die Isolierung des jeweils resultierenden Feststoffs zweckmäßigerweise durch Absaugen und die Abtrennung überschüssigen Titantetrachlorids zweckmäßigerweise durch Waschen mit einem flüssigen Kohlenwasserstoff - bis dieser kein Titantetrachlorid mehr aufnimmt - erfolgt. Der hierbei in Betracht kommende flüssige Kohlenwasserstoff kann ein Kohlenwasserstoff der Art sein, die üblicherweise mit Titan-Komponenten für Katalysatoren des Ziegler-Natta-Typs ohne Schaden für den Katalysator bzw. dessen Titan-Komponente zusammengebracht wird; - z.B. bei der Polymerisation von $\alpha$-Monoolefinen. Als Beispiele für geeignete Kohlenwasserstoffe seien genannt: Pentane, Hexane, Heptane, Benzine und Cyclohexan.

Die nach dem erfindungsgemäßen Verfahren hergestellten Titan-Komponenten für Katalysatoren des Ziegler-Natta-Typs lassen sich bei der Polymerisation von $\alpha$-Olefinen in einschlägig üblicher Weise einsetzen, d.h. man wird diese Titan-Komponenten im allgemeinen zusammen mit einem metallorganischen Aktivator verwenden, insbesondere mit Aluminiumalkylverbindungen der Formeln $Al(Alkyl)_3$ bzw. $ClAl(Alkyl)_2$, die 1 bis 8 Kohlenstoffatome per Alkylrest aufweisen, und vor allem mit Triäthylaluminium bzw. Diäthylaluminiumchlorid.

Wie sich gezeigt hat, ist es in vielen Fällen von Vorteil, die neuen Titan-Komponenten bei der Polymerisation nicht nur zusammen mit Aktivatoren der vorerwähnten Art zu verwenden, sondern auch zusätzlich mit einschlägig üblichen Promotoren. Dabei haben sich im gegebenen Zusammenhang
besonders bewährt die Ester von $C_1$- bis $C_4$-Alkanolen mit
p-Alkyl- oder - vorzugsweise - p-Alkoxybenzoesäuren mit
$C_1$- bis $C_4$-Alkyl bzw. Alkoxygruppen; - wofür ein typisches
Beispiel der Anissäureäthylester ist.

Die nach dem erfindungsgemäßen Verfahren hergestellten
Titan-Komponenten liefern besonders gute Ergebnisse bei
der Trockenpolymerisation von $\alpha$-Olefinen, d.h. der Polymerisation in Abwesenheit flüssiger Hilfsmedien; aber auch
die Polymerisation in Anwesenheit flüssiger Hilfsmedien
ist mit gutem Erfolg möglich. Das Molekulargewicht läßt
sich durch die üblichen Regler, insbesondere Wasserstoff,
einstellen. Besonders geeignete zu polymerisierende
$\alpha$-Olefine sind solche mit 2 bis 6 Kohlenstoffatomen, insbesondere Propylen, Buten-1 und 4-Methylpenten-1, sowie -
zur Copolymerisation - Äthylen.

Beispiel

A)     Herstellen der Titan-Komponente des Polymerisationskatalysators

1.     In der ersten Stufe werden

1.1     100 Gewichtsteile eines kleinteiligen, einen
Teilchendurchmesser im Bereich von 95 bis 355 µm
aufweisenden Stoffes der Formel
$Mg_6Cl_{12} \cdot 2\ AlCl_3$ mit

1.2     32 Gewichtsteilen des Benzoesäureäthylesters in einer Kugelschwingmühle unter einer Mahlbeschleunigung von 48 m . sec$^{-2}$ über eine Zeitspanne von 80 Stunden in Abwesenheit von Verdünnungsmitteln miteinander vermahlen.

2.   In der zweiten Stufe werden

2.1   100 Gewichtsteile des aus Stufe (1) resultierenden Stoffes mit

2.2   750 Gewichtsteilen Titantetrachlorid

zusammengebracht und das Ganze unter ständigem Rühren 1 Stunde auf einer Temperatur im Bereich von 75 bis 85°C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen läßt.

3.   In der dritten Stufe werden

3.1   100 Gewichtsteile des aus Stufe (2) resultierenden Feststoffes erneut mit

3.2   750 Gewichtsteilen Titantetrachlorid

zusammengebracht und das Ganze unter ständigem Rühren 1 Stunde auf einer Temperatur im Bereich von 125 bis 130°C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen läßt.

Auf diese Weise wird eine Titan-Komponente erhalten, die einen Titangehalt von 1,7 Gewichtsprozent und einen Chlorgehalt von 58,6 Gewichtsprozent aufweist.

B)     Polymerisation mittels der Titan-Komponente

Ein Rührgefäß wird mit 500 ml n-Heptan, 0,4 g der Titan-Komponente, 10 mMol Aluminiumtriäthyl sowie 2 mMol Anissäureäthylester (als Promotor) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 287 g Polypropylen pro g Titan-Komponente erhalten; es weist 11,1 % in siedendem n-Heptan löslicher Anteile auf.

## Patentanspruch

Verfahren zum Herstellen einer Titan-Komponente für Polymerisationskatalysatoren des Ziegler-Natta-Typs, dadurch gekennzeichnet, daß man zunächst

(1) in einer ersten Stufe

    (1.1) 100 Gewichtsteile eines kleinteiligen, einen Teilchendurchmesser im Bereich von 20 bis 1000 μm aufweisenden Stoffes der allgemeinen Formel $Mg_6Cl_{12} \cdot x\, AlCl_3$, worin x steht für eine Zahl im Bereich von 0,5 bis 3; mit

    (1.2) 5 bis 100 Gewichtsteilen eines Benzoesäurealkylesters, dessen Alkylgruppen 1 bis 8 Kohlenstoffatome aufweisen;

in einer Kugelschwingmühle unter einer Mahlbeschleunigung von 30 bis 80 m . $sec^{-2}$ über eine Zeitspanne von 10 bis 200 Stunden in Abwesenheit von Verdünnungsmitteln miteinander vermahlt; dann

(2) in einer zweiten Stufe

    (2.1) 100 Gewichtsteile des aus Stufe (1) resultierenden Stoffes mit

    (2.2) 300 bis 1800 Gewichtsteilen Titantetrachlorid

zusammenbringt, das Ganze unter ständiger Durchmischung 0,1 bis 5 Stunden auf einer Temperatur im

0007545

Bereich von 40 bis 180°C hält und den dabei resultierenden Feststoff unter Abtrennung überschüssigen Titantetrachlorids isoliert; und schließlich

(3) - gegebenenfalls - in einer dritten Stufe

(3.1) 100 Gewichtsteile des aus Stufe (2) resultierenden Feststoffes erneut mit

(3.2) 300 bis 1800 Gewichtsteilen Titantetrachlorid

zusammenbringt, das Ganze unter ständiger Durchmischung 0,1 bis 5 Stunden auf einer Temperatur im Bereich von 40 bis 180°C hält und den dabei resultierenden Feststoff unter Abtrennung überschüssigen Titantetrachlorids isoliert.

**Europäisches Patentamt**

## EUROPÄISCHER RECHERCHENBERICHT

Nummer der Anmeldung

EP 79 10 2462

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 734 652 (MITSUI)<br>* Ansprüche 1-13; Beispiele 1-3, 12-14 * | 1 |
| | -- | |
| | DE - A - 2 163 851 (BASF)<br>* Anspruch; Beispiele 1,3,6,7 * | 1 |
| | -- | |
| | DE - A - 2 163 852 (BASF)<br>* Anspruch; Beispiele 1,2 * | 1 |
| | ---- | |

**KLASSIFIKATION DER ANMELDUNG (Int.Cl. 3)**

C 08 F 10/00
4/64

**RECHERCHIERTE SACHGEBIETE (Int. Cl. 3)**

C 08 F 10/00-
10/14
110/00-
110/14
210/00-
210/18
4/64

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-10-1979 | WEBER |

EPA form 1503.1 06.78